# EUROPÄISCHE PATENTANMELDUNG

(11) **EP 0 603 564 A2**
(43) Veröffentlichungstag der Anmeldung: **29.06.1994**
(21) Anmeldenummer: 93118897.3
(22) Anmeldetag: 24.11.1993
(51) Int. Cl.: A44C 21/00, B32B 15/01

(54) **Münzrohling, der im wesentlichen aus Kupfer und Nickel besteht**

(30) Priorität: 23.12.1992 DE 4243855
(71) Anmelder: Krupp VDM GmbH, D-58791 Werdohl (DE)
(72) Erfinder: Rinke, Horst, D-58513 Lüdenscheid (DE); Kolb-Telieps, Angelika, Dr.-Ing., D-58509 Lüdenscheid (DE); Heubner, Ulrich, Dr.-Ing., D-58791 Werdohl (DE)
(74) Vertreter: Cohausz & Florack

(57) **Zusammenfassung**

Die Erfindung befaßt sich mit einem weißen Münzrohling aus Kupfer und Nickel, bei dem die Zusammensetzung der Kupfer-Nickel-Legierung der Kernschicht (1) ein von der Zusammensetzung der weiteren Kupfer-Nickel-Legierung der Deckschichten (2,3) abweichendes Verhältnis vom Kupferanteil zum Nickelanteil aufweist, und bei dem vorzugsweise durch Kombination einer ersten Kupfer-Nickel-Legierung mit 8 bis 20 % Nickel und einer zweiten Kupfer-Nickel-Legierung mit 20 bis 40 % Nickel gebildet sind und sich benachbarte Schichten im Nickelgehalt um wenigstens 5 % unterscheiden.

## Beschreibung

Die Erfindung bezieht sich auf einen Münzrohling, der im wesentlichen aus Kupfer und Nickel besteht, dabei mindestens 50 % Kupfer enthält und der aus drei Schichten, einer Kernschicht und zweier auf die Kernschicht aufplattierter Deckschichten zusammengesetzt ist. Die Farbe solcher Münzrohlinge, die aus entsprechenden Schichtverbundblechen ausgestanzt werden, hängt naturgemäß von der Farbe der Deckschichten und diese wiederum von der hierfür gewählten Legierungszusammensetzung ab. Heute sind weiße Münzen sehr verbreitet.

Bei den in früheren Zeiten gebräuchlichen goldenen oder silbernen Kurant-Münzen entsprach der Metallwert (Gold, Silber) im wesentlichen dem Nennwert der Münzen, sodaß ihr effektiver Wert stets den Metallpreisänderungen folgte. Der mit der Industrialisierung und Intensivierung von Handel und Verkehr zunehmende Bedarf an Münzen wurde ab Mitte des 19. Jahrhunderts mehr und mehr durch Scheidemünzen gedeckt, bei denen der Metallwert im allgemeinen nur einen Bruchteil des Nenn- oder Prägewertes ausmachte. Inzwischen sind aber auch Scheidemünzen aus Gold oder Silber nicht mehr gebräuchlich, weil der Metallwert so stark angestiegen ist, daß der Prägewert der Münzen erreicht oder überschritten wurde, zumindest aber für eine wirtschaftliche Münzherstellung zu hoch ist.

Die klassischen Münzmetalle Gold und Silber sind inzwischen weitestgehend durch andere Werkstoffe ersetzt. Vielfach ist dabei versucht worden, die ursprüngliche Münzfarbe beizubehalten, wobei oftmals Nickel anstelle von Silber und bestimmte Kupferlegierungen anstelle von Gold getreten sind.

Besonders bewährt als weißer Münzwerkstoff hat sich dabei eine Legierung aus Kupfer mit 25 Masse % Nickel (CuNi25). Aufgrund ihres vergleichsweise niedrigen Nickelgehalts ist sie deutlich kostengünstiger als Werkstoffe aus unlegiertem Nickel oder überwiegend Nickel enthaltende Legierungen. Während man für letztere nach preiswerteren Substituten sucht, beispielsweise durch Kombination eines ferritischen Chrom-Stahles mit einem austenitischen Chrom-Nickel-Stahl gemäß der DE 3817657 A1, sind die CuNi25-Münzwerkstoffe nach wie vor in vielen Ländern in Gebrauch, so z.B. für die 0,50 und 1 DM-Münzen in Deutschland und für die 5 Pence-Münzen in Großbritannien. Im Fall von künftigen Umstellungen der Münzsysteme, sei es inflationsbedingt oder anläßlich einer kommenden Wirtschafts- und Währungsunion ist aber zu berücksichtigen, daß solche Umstellungen niemals von heute auf morgen erfolgen, sondern relativ lange Zeit alte und neue Münzen parallel im Umlauf sein werden. Diese müssen deshalb im Gebrauch sicher unterschieden werden können.

Während eine solche Unterscheidung im Hand-zu-Hand-Verkehr mittels geeigneter Gestaltung der Prägebilder problemlos ist, gilt dies nicht für die Akzeptanz in Verkaufsautomaten und Münzwechselgeräten. Für diese müssen hinreichend große Unterschiede meßbarer physikalischer Eigenschaften der unterschiedlichen Münztypen vorliegen. Die Unterschiede durch andere Abmessungen zu schaffen, scheidet grundsätzlich aus, um Münzautomaten und dergleichen nicht umbauen zu müssen und um auch ältere Geräte, die noch für jede Münzgröße einen separaten, geometrisch angepaßten Einwurfschlitz haben, weiterverwenden zu können.

Im Fall des gängigen CuNi25-Münzwerkstoffs ist es möglich, solche physikalische, berührungslos meßbare Unterschiede zu schaffen, indem man einen Schichtverbundwerkstoff aus CuNi25 vorsieht, in den gemäß DE-AS 15 58 703 als Kern eine Schicht Nickel eingezogen ist oder bei dem alternativ zwei Deckschichten aus Nickel auf einen CuNi25-Kern plattiert sind. In beiden Fällen kann die Nickel-Komponente aufgrund ihres Ferromagnetismus hinreichende Unterscheidungsmöglichkeiten verschaffen. Solche Münzen aus CuNi25-Ni-Verbundwerkstoffen sind aber bereits im Umlauf und deshalb im Fall beispielsweise einer Währungsunion ebenso zu substituieren wie die massiven CuNi25-Münzen.

Aufgabe der Erfindung ist es, den Prägeanstalten Münzrohlinge für die Herstellung von Münzen bereitzustellen, die den geschilderten Bedürfnissen entsprechend von den zu ersetzenden alten weißen Münzen durch Automaten sicher unterschieden und auch wirtschaftlich produziert werden können.

Erfindungsgemäß wird bei dem gattungsgemäßen Münzrohling vorgeschlagen, daß die drei Schichten durch Kombination zweier Kupfer-Nickel-Legierungen gebildet sind, die Kernschicht aus einer ersten Legierung mit 8 bis 20 % Nickel, Rest Kupfer und erschmelzungsbedingte Beimengungen und die beiden Deckschichten einer Legierung mit 20 bis 40 % Nickel, Rest Kupfer und erschmelzungsbedingte Beimengungen bestehen. Ein nach diesen Bedingungen gestalteter Münzrohling führt in Erfüllung der gestellten Aufgabe zu einer unterscheidungsfähigen Münze.

Ein dreischichtiger Münzrohling mit einer Kernschicht aus 2 bis 6 % Nickel enthaltenden Kupferlegierung und Deckschichten aus einer 20 bis 30 % Nickel enthaltenden Kupferlegierung war aus der DE-OS 26 50 514 bekannt. Ein derartiger dreischichtiger Münzrohling weist unterschiedliche Färbungen der Kern- und Deckschichten auf. Ein derartiger Münzrohling ist nicht aufgabengemäß weiß und erfüllt nicht die eingangs geschilderten Forderungen.

Überraschenderweise hat sich durch die Erfindung herausgestellt, daß es ohne massivem ferromagnetischen Nickelkern möglich ist, mit einem Kern geringen Nickelgehaltes eine Münze zu schaffen, die mittels der heute überwiegend verwendeten elektronischen Münzprüfgeräte dennoch sicher von massiven CuNi25-Münzen unterscheidbar sind.

Es war ebenso überraschend, daß der Gesamteindruck der aus dem Münzrohling hergestellten Münze der einer weißen Münze ist. Zwar verlieren Kupfer-Nickel-Legierungen, wenn man die Oberfläche eines entsprechenden Bleches betrachtet, erst ab etwa 15 % Nickel ihren rötlichen Charakter für das farbliche Empfinden des menschlichen Auges weitgehend (vgl. Z. Metallkunde 74 (1983), S. 684 bis 686), geht es aber wie bei der Erfindung um den Anschnitt einer beidseits weiß plattierten Zwischenschicht, so ist der rötliche Charakter auch schon bei nur 8 % Nickel-Anteil so gering, daß er für das menschliche Auge kaum wahrnehmbar ist, d.h. der Münzrand erscheint auch in solch einem Fall praktisch durchgehend weiß. Man kann also so Münzen herstellen, die auch am Rand weiß erscheinen, um beispielsweise gut lesbare Randprägungen aufbringen zu können. Diese Farbbedingung ist bei CuNi25-Schichtverbundwerkstoffen mit einem Kern aus unlegiertem Kupfer, wie in den US-amerikanischen Münzen üblich, nicht gegeben.

Die Erfindung schont zugleich die entsprechenden Rohstoffquellen, indem sie ihren Metallbedarf zu einem großen Teil den zu ersetzenden alten Münzen entnimmt. Sie ist in der Lage, künftige große Mengen von CuNi25-Rückläufen aufzunehmen. Es ist nämlich damit zu rechnen, daß große Mengen derartiger Kupfer-Nickel-Legierungen als durch die Erfindung besonders wirtschaftlich wiederzuverwertender Rücklauf anfallen werden. Die Verwendungsmöglichkeiten des CuNi25-Legierungstyps außerhalb der Münztechnik sind nämlich sehr beschränkt.

Schließlich sollen nach Anspruch 2 die aufplattierten Deckschichten jeweils mindestens 30 µm dick sein.

Man verfährt also bevorzugt derart, daß ein Kern aus einer Kupfer-Nickel-Münzlegierung geringeren Nickelgehalts und damit hoher elektrischer Leitfähigkeit beidseitig mit Deckschichten aus einer Kupfer-Nickel-Legierung höheren Nickelgehalts wie beispielsweise dem Standard CuNi25-Legierungstyp plattiert wird. Diese Deckschicht-Legierung kann durch Beimengungen von beispielsweise Nickelmünz-Rückläufen auch auf höhere Nickelgehalte bis zu 40 % gebracht werden. Als Kernwerkstoffe sind solche mit 8 bis 16 % Nickel zweckmäßig. Diese sind entweder aus einem CuNi25-Standard-Münzrücklauf durch Verdünnen mit gängigen CuNi10Fe-Schrotten oder Kupfer-Rückläufen leicht zu gewinnen oder sie liegen im Fall einer Währungsunion als arteigene CuNi16-Rückläufe (20 britische Pence) vor. Eine Münze aus einem solchen Schichtverbundwerkstoff ist mit Hilfe heutiger elektronischer Münzprüfgeräte von CuNi25-Münzen gut zu unterscheiden.

Die Erfindung wird anhand der Abbildungen näher erläutert. Es zeigt
- Fig. 1: einen Münzrohling
- Fig. 2: ein Schliffbild eines Münzrohlings

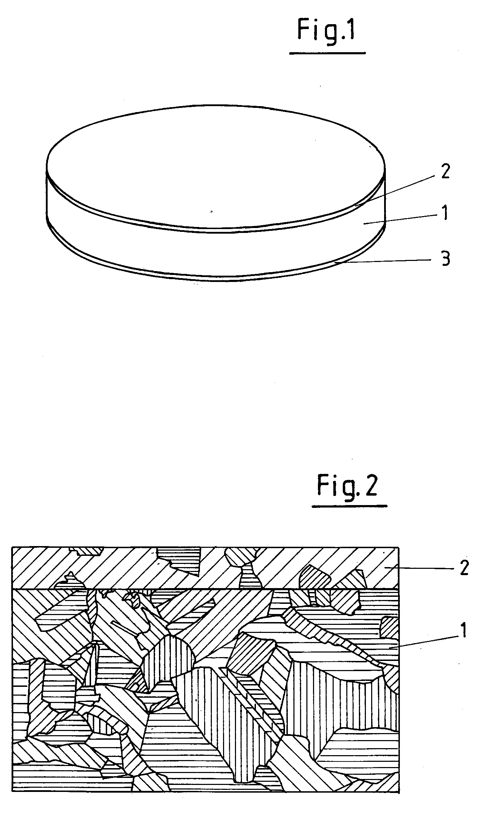

Fig. 1 zeigt einen Münzrohling als schematisches Beispiel bestehend aus einer Kernschicht 1 aus CuNi8 und zwei Deckschichten 2 und 3 aus CuNi25. Die beiden aufplattierten Deckschichten machen jeweils 3,5 % der Schichtdicke aus, die für einen gängigen Münzrohling mit einer Gesamtdicke von beispielsweise 2 mm eine Schichtdicke von 0,07 mm bedeuten. Die Kernschicht ist dann 1,06 mm dick. Beim Stauchen und Prägen der Münzen aus den Münzrohlingen nimmt die Randdicke im Mittel um etwa 20 bis 25 % zu.

Für einen Münzrohling nach dem vorgenannten Beispiel gelten etwa die Analysenwerte nach Tabelle 1:

**Tabelle 1**

| (Masse-Prozent) | Kernschicht % | Deckschichten % |
|---|---|---|
| C max | 0,015 | 0,003 |
| Si max | 0,05 | 0,05 |
| Mn | 0,1 bis 0,2 | 0,15 bis 0,28 |
| S max | 0,015 | 0,015 |
| P max | 0,005 | 0,01 |
| Ni | 8 bis 9 | 24 bis 25 |
| Mg | 0,01 bis 0,04 | 0,01 bis 0,04 |
| Fe | 0,2 bis 0,3 | 0,2 bis 0,3 |
| Rest Cu und sonstige erschmelzungsbedingte Beimengungen. | | |

Der Gesamtnickelgehalt liegt bei einem solchen Münzrohling um 9 bis 10 %, sodaß eine gegebene Rücklaufmenge an Altmünzen mit hohem Nickelgehalt ein Ausgangswerkstoff für eine viel größere Menge an erfindungsgemäßen Münzen sein kann.

Fig. 2 zeigt im Querschnitt die hervorragende Plattierhaftung der Deckschicht 1 auf der Kernschicht 2. Dieses Beispiel macht die Bedeutung der Erfindung auch insofern deutlich, als die Hauptkomponente CuNi8 weder als Halbzeug im Handel noch in Form niedrigwertiger Münzen (Beispiel: 20 polnische Zloty aus CuNi25 als 1 DM-Falsifikate) für Fälscher leicht erhältlich ist.

Eine Münze aus dem Verbund gemäß Fig. 1 wird von einem heutigen elektronischen Münzprüfer eindeutig von solchen gleicher Abmessungen aus CuNi25 unterschieden. Zum Zweck der Materialerkennung arbeiten Prüfgeräte nämlich mit elektromagnetischen Spulen als Sensoren, welche die elektrische Leitfähigkeit des Prüflings auf induktivem Weg, d.h. berührungslos messen. Dazu werden Ströme unterschiedlicher Frequenzen benutzt, was zur Folge hat, daß die niederfrequenten Ströme die gesamte Münze durchdringen, also zur Erkennung des CuNi8-Kerns genutzt werden können. Hochfrequente Wechselströme dagegen fließen aufgrund des Skineffektes nur in den Oberflächenschichten und können zur Identifizierung des CuNi25 dienen. Durch die Auswertung beider induktiver Signale, desjenigen aus dem mit niedrigerer Frequenz arbeitenden Sensors und des anderen mit höherer Frequenz betriebenen Sensors, ist die Münze aus 2 x 3,5 % CuNi25 auf CuNi8 eindeutig erkennbar und unterscheidbar von Falsifikaten aus beispielsweise massiv CuNi25.

Die eindeutigen Ergebnisse sind insbesondere auch damit zu erklären, daß bei der im Beispiel dargestellten bevorzugten Ausführungsform der Erfindung der elektrisch besser leitfähige Werkstoff die Kernschicht 1 bildet. Der spezifische elektrische Widerstand von CuNi8 in der Kernschicht beträgt 13 µ Ohm cm im Vergleich zu 36 µ Ohm cm von CuNi25 in der Deckschicht. Eine größere Anzahl solcher Münzrohlinge, die exakt 1,97 mm Dicke bei 25,30 mm Durchmesser hatten wurde mit einem Prüfgerät vom Typ NRI G 18 geprüft. Dies ist ein kommerziell gängiges Prüfgerät. Die angezeigten Signale ergaben sich mit 133 (Mittelwerte); im Vergleich zu 94 für massiv CuNi25 bei Materialerfassung mit niedriger Frequenz.

Die in diesem Anwendungsbeispiel dargestellte Dicke der Außenschichten hat sich also in diesem zur Zeit gängigen Münzprüfer-Typ bewährt. Bei extrem dünnen Außenschichten (weniger als 20 µm) sind die Arbeitsfrequenzen nicht hoch genug, um den Strom aus dem Münzkern zu verdrängen.

Die Erfindung ist zwar primär auf die im europäischen Bereich sich abzeichnenden Gegebenheiten abgestellt, es lassen sich aber auch Anwendungsfälle z.B. in entfernteren Territorien darstellen, in denen das Problem der Unterscheidung von alten und neuen Münzen gleicher Abmessungen nicht besteht. Dort wäre Einsatz von Münzen möglich, bei denen die nickelärmere, gut leitfähige Schicht des Schichtverbundes die Deckschicht beidseits der Kernschicht ist.

## Patentansprüche

1. Münzrohling, der im wesentlichen aus Kupfer und Nickel besteht, wobei der Kupferanteil mindestens 60 % beträgt, und der aus drei Schichten, einer Kernschicht und zweier auf die Kernschicht aufplattierter Deckschichten zusammengesetzt ist, wobei die Kupfer-Nickel-Legierung der Kernschicht einen von der Zusammensetzung der Kupfer-Nickel-Legierung der Deckschichten um wenigstens 5 % abweichenden Nickelanteil hat,
**dadurch gekennzeichnet,** daß die drei Schichten durch Kombination zweier Kupfer-Nickel-Legierungen gebildet sind, die Kernschicht (2) aus einer ersten Legierung mit 8 bis 20 % Nickel, Rest Kupfer und erschmelzungsbedingte Beimengungen und die beiden Deckschichten (1, 3) einer Legierung mit 20 bis 40 % Nickel, Rest Kupfer und erschmelzungsbedingte Beimengungen bestehen.

2. Münzrohling nach Anspruch 1,
**dadurch gekennzeichnet**, daß die beiden Deckschichten (2, 3) in einer Dicke von jeweils mindestens 30 µm dick auf die Kernschicht (1) plattiert sind.
